# EUROPEAN PATENT SPECIFICATION

(11) **EP 3 869 582 B1**
(45) Date of publication and mention of the grant of the patent: **14.12.2022**
(21) Application number: 19872611.9
(22) Date of filing: 11.10.2019
(51) Int. Cl.: H01M 50/541, H01M 50/529, H01M 50/533, H01M 10/12

(54) **LEAD STORAGE BATTERY**
BLEIAKKUMULATOR
BATTERIE DE STOCKAGE AU PLOMB

(30) Priority: 16.10.2018 JP 2018194891
(43) Date of publication of application: 25.08.2021
(73) Proprietor: GS Yuasa International Ltd., Kisshoin, Minami-ku, Kyoto-shi, Kyoto 601-8520 (JP)
(72) Inventor: OHNISHI, Mikito, Kyoto-shi, Kyoto 601-8520 (JP); YAMASHITA, Hiroto, Kyoto-shi, Kyoto 601-8520 (JP)
(74) Representative: Isarpatent
(86) International application number: PCT/JP2019/040195
(87) International publication number: WO 2020/080282

(56) References cited:
- AU-B2- 442 801
- JP-A- H09 147 828
- JP-A- 2006 012 602
- JP-A- 2007 059 171
- JP-U- S57 152 768
- US-A- 4 171 564
- US-A1- 2010 190 045

## Description

### TECHNICAL FIELD

The present invention relates to a lead-acid battery.

### BACKGROUND ART

Lead-acid batteries are used for in-vehicle use, industrial use, and for various other uses. The lead-acid battery includes an element in which positive electrode plates and negative electrode plate are alternately layered with a separator provided in between. The positive electrode plate and the negative electrode plate are formed by a current collector and an electrode material held by the current collector. The current collector has a lug portion for current collection protruding upward. The lug portions of the electrode plates of the same polarity are collectively connected by a strap. The elements are inserted into cell chambers provided in a container, and are connected to each other by electrically connecting the straps of the adjacent cell chambers.

For example, Patent Document 1 discloses a lead-acid battery having the following configuration to have a large capacity. Specifically, the lead-acid battery includes an inter cell connection portion connecting elements of adjacent cells to each other by resistance welding through a partition through hole of a container, and the lower end of the partition through hole is positioned lower than the upper surface of the strap.

Patent Document 2 discloses a lead-acid battery including a strap with a first joining portion connecting a bottom surface of an inter cell connection portion and a side surface of a plate current collector which is not arranged immediately below the inter cell connection portion connecting adjacent cells to each other. With such a configuration, the lead-acid battery disclosed in Patent Document 2 can have many plates arranged, and thus can have a larger capacity.

Additional lead-acid batteries with straps and inter cell connections are disclosed in patent documents US4171564, AU442801B2 and US2010/190045A1.

### PRIOR ART DOCUMENTS

### PATENT DOCUMENTS

Patent Document 1: Japanese Patent Publication No. 9-147828
Patent Document 2: Japanese Patent Publication No. 2011-181322

### SUMMARY OF THE INVENTION

### PROBLEMS TO BE SOLVED BY THE INVENTION

The inventors of the present application have arrived at the invention of the present application by focusing on a fact that the lead-acid battery has the following concerns. Specifically, when a large current overwhelming the expected level flows in the lead-acid battery, a part of the strap may melt due to heat. This may result in short circuit of the elements due to the molten strap dripping onto the elements. Thus, when the large current overwhelming the expected level flows in the lead-acid battery, short circuit of the elements may occur, rendering the lead-acid battery unusable.

The present invention has been made in view of the above problems, and an object of the present invention is to provide a lead-acid battery that is less likely to be unusable even when a large current overwhelming the expected level flows therein.

### MEANS FOR SOLVING THE PROBLEMS

A lead-acid battery of the present invention to solve the problem described above includes: elements each having positive electrode plates and negative electrode plates alternately layered with a separator provided in between and including a lug portion; straps connected to the lug portions of the elements; and a plurality of cell chambers accommodating the respective elements and the respective straps, wherein a direction in which the positive electrode plates and the negative electrode plates are layered is defined as a first direction, a direction in which the lug portions and the straps are connected to each other is defined as a second direction, and a direction orthogonal to the first direction and the second direction is defined as a third direction, the straps each include: a base portion including a connection region connected with the lug portion; a tab portion having at least a part positioned in the third direction with respect to the base portion; and an inter cell connection portion protruding in the first direction from the tab portion and electrically connecting the elements accommodated in adjacent ones of the cell chambers, and a second cross-sectional area is larger than a first cross-sectional area, where the first cross-sectional area is a minimum cross-sectional area of the inter cell connection portion in a plane orthogonal to the first direction, and the second cross sectional area is a minimum cross-sectional area of the strap in a plane dividing the strap into one side corresponding to the connection region and another side corresponding to the inter cell connection portion.

### BRIEF DESCRIPTION OF THE DRAWINGS

Fig. 1 is a perspective view illustrating a lead-acid battery 100 according to an embodiment of the present invention.
Fig. 2 is a perspective view illustrating a strap 20 of the lead-acid battery 100 according to the embodiment of the present invention.
Fig. 3 is a top view of the strap 20 illustrated in Fig. 2.
Fig. 4 is a side view of the strap 20 illustrated in Fig. 2.
Fig. 5 is a diagram illustrating a state in which the straps 20 are connected between adjacent cell chambers 14.
Fig. 6 is a diagram illustrating a strap 201 according to a first modification example of the present invention and includes Fig. 6(a) which is a perspective view and Fig. 6(b) which is a top view.
Fig. 7 is a diagram illustrating a strap 202 according to a second modification example of the present invention and includes Fig. 6(a) which is a perspective view and Fig. 6(b) which is a top view.

### MODE FOR CARRYING OUT THE INVENTION

### [Embodiment]

Hereinafter, an embodiment of the present invention will be described in detail with reference to the drawings.

### (Schematic configuration of lead-acid battery 100)

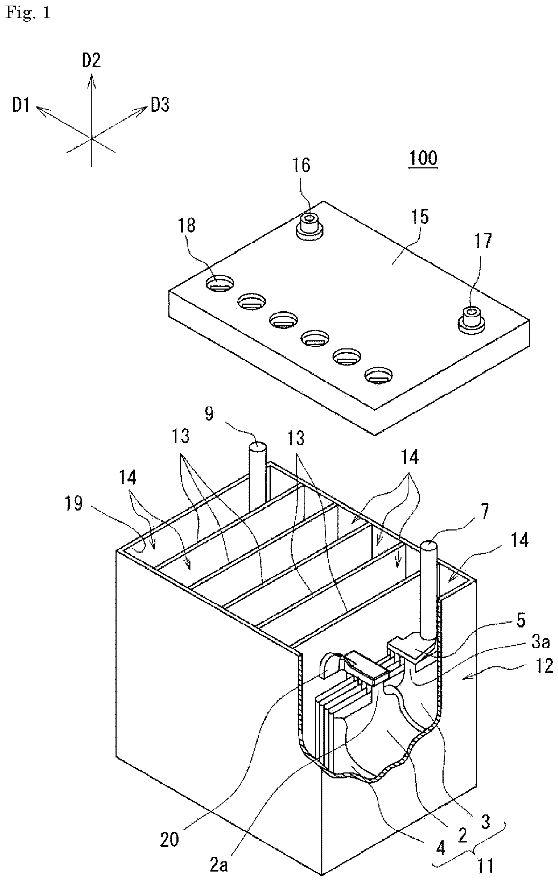

Fig. 1 is a perspective view illustrating a lead-acid battery 100 according to an embodiment of the present invention.

As illustrated in Fig. 1, the lead-acid battery 100 includes: a plurality of elements 11; an electrolyte solution (not illustrated); a container 12 that contains the elements 11 and the electrolyte solution and has an opening on the upper side; and a lid 15 that seals the opening of the container 12.

The container 12 is a substantially rectangular parallelepiped shaped case having an upper surface provided with an opening portion 19, and is formed by synthetic resin for example. The container 12 has partitions 13. The partitions 13 partition the interior of the container 12 into a plurality of cell chambers 14 arranged in a predetermined direction.

One element 11 is contained in each cell chamber 14 of the container 12. Thus, when the container 12 is partitioned into the six cell chambers 14, the lead-acid battery 100 includes six elements. Each cell chamber 14 further contains electrolyte solution including dilute sulfuric acid, and the element 11 is substantially entirely immersed in the electrolyte solution.

The opening portion 19 of the container 12 is sealed by the lid 15 having a shape corresponding to that of the opening portion 19. More specifically, a circumference edge portion of a lower surface of the lid 15 and a circumference edge portion of the opening portion 19 of the container 12 are joined to each other by heat welding for example. The lid 15 includes a negative electrode bushing 16 and a positive electrode bushing 17. The lid 15 is provided with vent plugs 18 at position corresponding to the respective cell chambers 14. Water addition for the lead-acid battery 100 is performed by supplying additional water with the vent plugs 18 removed. The vent plugs 18 may have a function of discharging gas produced inside the cell chamber 14, to the outside of the lead-acid battery 100.

The elements 11 each include a plurality of negative electrode plates 2 and positive electrode plates 3 layered with a separator 4 provided in between. Here, the separator 4 illustrated has a shape of a bag accommodating the negative electrode plate 2, but the form of the separator is not particularly limited. Specifically, the separator 4 needs not to be bag-shaped, and may accommodate the positive electrode plate 3.

The positive electrode plate 3 includes a positive electrode current collector and a positive electrode material supported by the positive electrode current collector. The positive electrode current collector is a conductive member having a skeleton arranged in a substantially grid pattern or a net-like pattern, and is formed of, for example, lead or a lead alloy (including, for example, a Pb-Ca alloy). The positive electrode current collector has an upwardly protruding positive electrode lug portion 3a at a portion in the vicinity of its upper end. The positive electrode material includes lead dioxide. The positive electrode material may further includes known additives.

The negative electrode plate 2 includes a negative electrode current collector and a negative electrode material supported by the negative electrode current collector. The negative electrode current collector is a conductive member having a skeleton arranged in a substantially grid pattern or a net-like pattern, and is formed of, for example, lead or a lead alloy. The negative electrode current collector has an upwardly protruding negative electrode lug portion 2a at a portion in the vicinity of its upper end. The negative electrode material includes lead (spongy lead). The negative electrode material may further include known other additives (such as carbon, lignin, and barium sulphate for example).

The plurality of positive electrode plates 3 of the element 11 are connected to a positive electrode strap 20P formed by lead or lead alloy. Thus, the plurality of positive electrode plates 3 are electrically connected in parallel via the positive electrode strap 20P. Similarly, the plurality of negative electrode plates 2 of the element 11 are connected to a negative electrode strap 20N formed by lead or lead alloy. Thus, the plurality of negative electrode plates 2 are electrically connected in parallel via the negative electrode strap 20N. In the following description, the positive electrode strap 20P and the negative electrode strap 20N are simply referred to as "strap 20" when they are not distinguished from each other.

In the cell chamber 14 positioned at one end portion (end portion closer to a positive electrode terminal) of the container 12, the lug portions 3a of the plurality of positive electrode plates 3 are connected to a positive pole 7 having a substantially cylindrical shape, via a connection member 5. Similarly, in the cell chamber 14 positioned at the other end portion (end portion closer to a negative electrode terminal) of the container 12, the lug portions 2a of the plurality of negative electrode plates 2 are connected to a negative pole 9 having a substantially cylindrical shape, via the connection member 5.

The positive pole 7 is inserted in a hole of the positive electrode bushing 17 of the lid 15, and is joined to the positive electrode bushing 17 by welding or the like for example. The positive pole 7 and the positive electrode bushing 17 form a positive electrode terminal portion functioning as an external terminal. The negative pole 9 is inserted in a hole of the negative electrode bushing 16 of the lid 15, and is joined to the negative electrode bushing 16 by welding or the like for example. The negative pole 9 and the negative electrode bushing 16 form a negative electrode terminal portion functioning as an external terminal.

### (Configuration of strap 20)

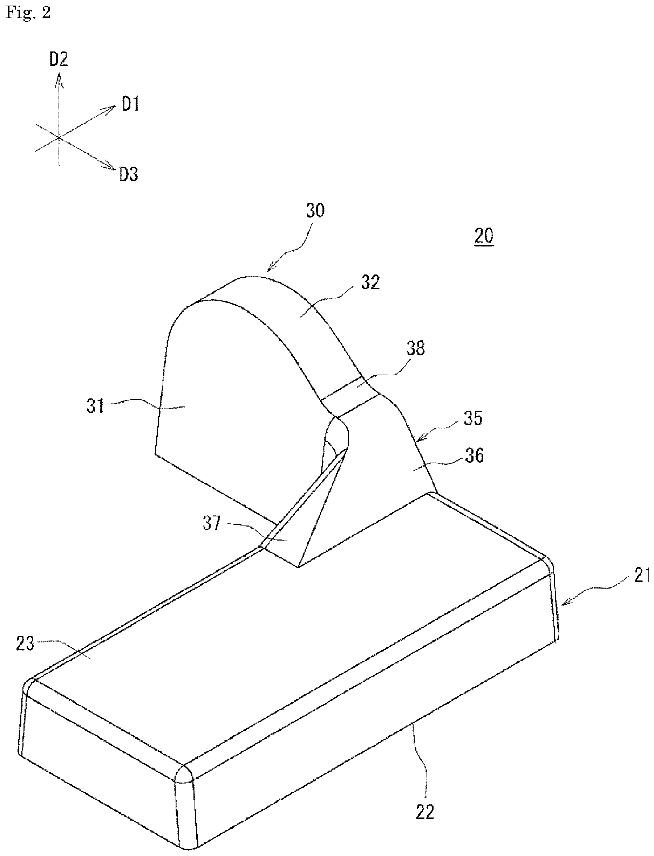

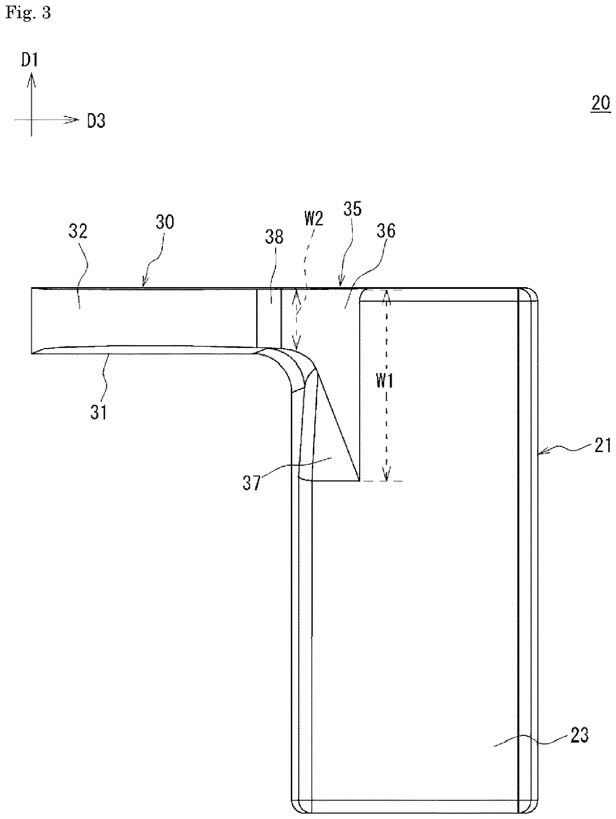

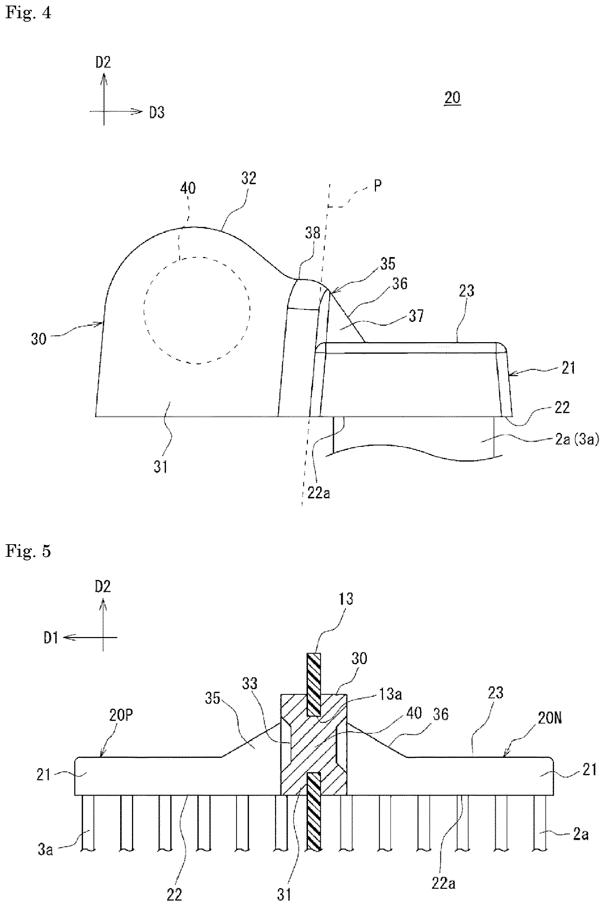

Figs. 2 to 4 are diagrams illustrating the shape of the strap 20 according to the present embodiment. Fig. 2 is a perspective view, Fig. 3 is a top view, and Fig. 4 is a side view. Fig. 5 is a diagram illustrating a state in which the straps 20 are connected between the adjacent cell chambers 14 via the partition 13. Figs. 2 and 3 illustrate the strap 20 before a later described inter cell connection portion 40 is formed. In Fig. 4, a later described recess portion 33 is omitted for the convenience of description.

As illustrated in Figs. 2 to 5, the strap 20 includes a base portion 21 connected to the positive electrode lug portion 3a or the negative electrode lug portion 2a of the element 11, a tab portion 30, and the inter cell connection portion 40 electrically connecting the elements 11 stored in the adjacent cell chambers 14 to each other. Hereinafter, for convenience of description, a direction in which the positive electrode plate 3 and the negative electrode plate 2 are layered in the element 11 is referred to as a first direction D1. A direction in which the positive electrode lug portion 3a of the element 11 or the negative electrode lug portion 2a of the element 11 is connected with the strap 20 is referred to as a second direction D2. A direction orthogonal to the first direction D1 and the second direction D2 is referred to as a third direction D3. In other words, the second direction D2 is a direction from the lid 15 to the container 12 and a direction from the container 12 to the lid 15, and is an extending direction of the bushing 17.

In the figures, the first direction D1, the second direction D2, and the third direction D3 are indicates by arrows extending in predetermined directions. Still, the first direction D1 is both of a direction in which the arrow extends in the figure, and a direction opposite to the direction in which the arrow extends. Similarly, the second direction D2 is both of a direction in which the arrow extends in the figure, and a direction opposite to the direction in which the arrow extends. The third direction D3 is both of a direction in which the arrow extends in the figure, and a direction opposite to the direction in which the arrow extends.

As illustrated in Fig. 5, the strap 20 is configured in such a manner that the inter cell connection portion 40 of the positive electrode strap 20P and the inter cell connection portion 40 of the negative electrode strap 20N electrically connected to each other through a through hole 13a formed in the partition 13, whereby the elements 11 in the adjacent cell chambers 14 are connected in series. As illustrated in Fig. 5, the positive electrode strap 20P and the negative electrode strap 20N facing each other with the partition 13 provided in between are shaped to be mirror symmetrical to each other with respect to the partition 13, but have the same function. Thus, the shape of only one of these will be described in the present specification.

The base portion 21 has a substantially rectangular parallelepiped shape. The base portion 21 includes a connection surface 22 to which the positive electrode lug portion 3a or the negative electrode lug portion 2a of the element 11 are connected. The strap 20 is connected to the positive electrode lug portion 3a or the negative electrode lug portion 2a of the element 11 in a connection region 22a of the connection surface 22. The connection region 22a is a region, in the connection surface 22, to which the positive electrode lug portion 3a or the negative electrode lug portion 2a of the element 11 is connected. The number of connection regions 22a formed is the same as the number of the positive electrode lug portions 3a or the negative electrode lug portions 2a connected to the strap 20.

The connection surface 22 is the bottom surface of the base portion 21 and is provided so as to be parallel to the plane including the first direction D1 and the third direction D3. An upper surface 23 of the base portion 21, which is a surface on the side opposite to the connection surface 22 in the second direction D2, is also provided to be parallel to the plane including the first direction D1 and the third direction D3.

The tab portion 30 electrically connects the inter cell connection portion 40 and the base portion 21 to each other, and includes a plate-shaped portion 31 connected to the inter cell connection portion 40 and an inclined portion 35 connecting the plate-shaped portion 31 and the base portion 21 to each other. The tab portion 30 has at least one portion positioned on the third direction D3 side with respect to the base portion 21. In other words, the tab portion 30 is provided on the side of the base portion 21.

The plate-shaped portion 31 is a plate-shaped member formed to have the thickness direction in the first direction D1, and has an arc-shaped upper surface 32. The plate-shaped portion 31 is provided to have the bottom surface substantially flush with the connection surface 22 of the base portion 21. The plate-shaped portion 31 is provided to have an end surface on the inter cell connection portion 40 side in the first direction D1 substantially flush with a shorter side surface of the base portion 21.

The inclined portion 35 includes two (a plurality of) inclined surfaces inclined from the upper surface 32 of the plate-shaped portion 31 toward the upper surface 23 of the base portion 21. Specifically, the inclined portion 35 includes a first inclined surface 36 and a second inclined surface 37. The first inclined surface 36 is a plane parallel to the first direction D1 and intersecting with the second direction D2. The second inclined surface 37 is a plane parallel to the third direction D3 and intersecting with the second direction D2.

The first inclined surface 36 has a substantially trapezoidal shape, with a first width W1, which is the width on the base portion 21 side, being wider than a second width W2, which is the width on the side opposite to the base portion 21 (plate-shaped portion 31 side). The second inclined surface 37 has a substantially triangular shape, with a first width W1, which is the width on the base portion 21 side, being wider than a second width W2, which is the width on the side opposite to the base portion 21 (plate-shaped portion 31 side).

The shape of the inclined surface of the inclined portion 35 is not particularly limited, and may have any shape as long as the first width W1, which is the width on the base portion 21 side, is larger than the second width W2, which is the width on the side opposite to the base portion 21 (plate-shaped portion 31 side). The shape of the inclined surface may be a substantially trapezoidal shape which is the shape of the first inclined surface 36 or may be a substantially triangular shape which is the shape of the second inclined surface 37. When the inclined surface has a substantially triangular shape, which the shape of the second inclined surface 37, with the width decreasing toward the plate-shaped portion 31 side from the base portion 21 side, the width on the plate-shaped portion 31 side is the width of an apex portion. In such a case, the second width is assumed to be 0. Specifically, event when the inclined surface has a substantially triangular shape with a width decreasing from the base portion 21 side toward the plate-shaped portion 31 side, the first width W1 can be regarded as being larger than the second width W2.

The tab portion 30 has a shoulder portion 38 that is more on the inter cell connection portion 40 side than the first inclined surface 36 and the second inclined surface 37. The shoulder portion 38 is provided between the inclined portion 35 and the upper surface 32 of the plate-shaped portion 31, and is inclined more gently than the first inclined surface 36 and the second inclined surface 37. In other words, the shoulder portion 38 is provided in a section between an end portion of the plate-shaped portion 31 in the second direction D2 on the upper surface 32 side, and a location where the inclined portion 35 (the first inclined surface 36 and the second inclined surface 37) and the base portion 21 are connected to each other.

The inter cell connection portion 40 is provided to protrude from the plate-shaped portion 31 of the tab portion 30 toward the partition 13 side. The inter cell connection portion 40 is formed in the following manner. First of all, the plate-shaped portion 31 of the positive electrode strap 20P and the plate-shaped portion 31 of the negative electrode strap 20N are arranged to face each other with the through hole 13a, formed in the partition 13, provided in between. Next, resistance welding is performed on the plate-shaped portion 31 of the positive electrode strap 20P and the plate-shaped portion 31 of the negative electrode strap 20N, using a resistance welding machine(not shown). As a result, a part of the plate-shaped portions 31 melts, and lead or lead alloy (hereinafter, simply referred to as lead) fills the inside of the through hole 13a. Then, the lead solidifies, whereby the inter cell connection portion 40 is formed. Thus, the inter cell connection portion 40 has a shape corresponding to that of the through hole 13a formed in the partition 13. In the present embodiment, the inter cell connection portion 40 has a substantially cylindrical shape with an axial direction being in the first direction D1.

Because a part of the plate-shaped portions 31 melts to be the inter cell connection portion 40, the recess portion 33 is formed in the plate-shaped portion 31 after the resistance welding (see Fig. 5). The partition 13 is formed to be orthogonal to the first direction D1 which is the layering direction of the elements 11, and the through hole 13a is formed therethrough in the first direction D1. Thus, the inter cell connection portion 40 also protrudes in the first direction D1 from the tab portion 30.

The minimum cross-sectional area of the inter cell connection portion 40 in a plane orthogonal to the first direction D1 is referred to as a first cross-sectional area. A plane P is defined as a plane dividing the strap 20 into one side which is the entirety of the connection region 22a of the base portion 21 and the other side which is the inter cell connection portion 40. Across-sectional area (minimum cross-sectional area) which is the smallest of the cross-sectional area of the strap 20 on any plane P cutting the tab portion 30, is referred to as a second cross-sectional area. The boundary plane between the inter cell connection portion 40 and the tab portion 30 may be the plane P, but it is assumed that such a plane is not included in the plane P. The strap 20 has the second cross-sectional area being larger than the first cross-sectional area described above. The first cross-sectional area is equal to the area of the inter cell connection portion 40 in Fig. 4. Fig. 4 illustrates an example of the plane P. Specifically, the plane P is a plane dividing the strap 20 into a first portion including the entirety of the connection portion 22a of the base portion 21 and a second portion including the entirety of the inter cell connection portion 40.

The first cross-sectional area is the minimum cross-sectional area of the cross-sectional area on a plane orthogonal to the first direction D1 cutting the inter cell connection portion 40. This means that when the inter cell connection portion 40 has a shape with a cross-sectional area differing among positions in the first direction D1, the cross-sectional area obtained by cutting the inter cell connection portion 40 at a position resulting in the smallest cross-sectional area is the first cross-sectional area.

### (Operation and effect)

Next, an operation and effect of the lead-acid battery 100 according to the present embodiment will be described.

Generally, when the lead-acid battery is used as an in-vehicle battery for example, a large current needs to temporarily flow in the lead-acid battery. When such large current flows in the lead-acid battery, the strap might be partially melted by heat if the large current flowing overwhelms an expected level.

The lead-acid battery 100 includes the strap 20 having at least a part of the tab portion 30 disposed on the third direction D3 side with respect to the base portion 21. The strap 20 has the second cross-sectional area being larger than the first cross-sectional area. With such a configuration, when a large current overwhelming the expected level flows in the lead-acid battery 100, a current density of a current flowing in the tab portion 30 is larger than a current density of a current flowing in the inter cell connection portion 40. Thus, melting of the tab portion 30 before the melting of the inter cell connection portion 40 can be suppressed.

When the tab portion 30 of the strap 20 melts, the molten lead drops onto the element 11, resulting in short circuit between plates. This might make the lead-acid battery 100 unusable. On the other hand, when the inter cell connection portion 40 of the strap 20 melts, because the partition 13 is present around the inter cell connection portion 40, the molten lead flows down from the through hole 13a along the partition 13, and solidifies while being attached to the partition 13. Thus, the molten lead is less likely to come into contact with the element 11. The molten lead flows along the partition, and thus even when the lead reaches the element, the lead comes into contact with only one of the positive electrode plate 3 or the negative electrode plate 2 in the end portion on the partition 13 side. Thus, an effect that the short circuit is less likely to occur is obtained. As described above, the strap 20 according to the present embodiment provides an effect that the short circuit due to the molten lead dripping onto the element 11 from the strap 20 is less likely to occur.

Thus, even when a large current overwhelming an expected level flows in the lead-acid battery 100 including the strap 20 according to the present embodiment, the short circuit of the element 11 is less likely to occur. Thus, the lead-acid battery 100 is less likely to be suddenly unusable, due to the short circuit of the elements 11.

When the tab portion 30 of the strap 20 melts to result in fusing, the molten lead flows down from the through hole 13a along the partition 13. Thus, the amount of lead in the through hole 13a decreases, and the inter cell connection portions 40 fused are less likely to come into contact with each other again.

On the other hand, in a lead-acid battery conventionally used including a strap with a shape having a tab portion provided in an upper portion of a base portion, the base portion and the tab portion are disposed to be arranged in the gravity direction. Thus, a contact area between the base portion and the tab portion is large in a certain degree. For the strap with such a shape, an idea of giving a sophisticated shape for preventing fusing or breaking, is focused on the inter cell connection portion only, meaning that there has been no idea focusing on other portions, and making the tab portion less likely to be fused or broken than the inter cell connection portion.

Next, a method of forming the strap 20 will be described. The strap 20 can be formed by a cast-on-strap (COS) method conventionally used. In the COS method, first or all, the molten lead is poured into a mold, and the positive electrode lug portion 3a or the negative electrode lug portion 2a of the element 11 is immersed in the molten lead and is then cooled. Then, releasing is performed, whereby the strap 20 is formed.

The strap 20 according to the present embodiment having the tab portion provided on the base portion side is plagued by a problem in that the molten lead is difficult to flow into the tab portion at the time of molding. Specifically, with a conventionally used strap having a structure in which the tab portion is provided in the upper portion of the base portion, the bottom surface of the tab portion is connected with the upper surface of the base portion. Thus, the connection area between the base portion and the tab portion can be easily made large so that the flow of the molten lead is facilitated. When the tab portion is provided in the upper portion of the base portion, the tab portion is on the lower side of the base portion in the gravity direction, and thus the molten lead poured from the base portion can easily flow into the tab portion. On the other hand, in a case of the strap with the tab portion provided on the side of the base portion, the contact area is a contact area between base portion and tab portion in a contact region between a side surface of the base portion and a side surface of the tab portion, and thus the connection area between the base portion and the tab portion is small.

In the strap 20 according to the present embodiment, the tab portion 30 includes the inclined portion 35 including the first inclined surface 36 and the second inclined surface 37. The first inclined surface 36 and the second inclined surface 37 have the first width W1, which is the width on the base portion 21 side, wider than the second width W2, which is the width on the side opposite to the base portion 21 (plate-shaped portion 31 side). Thus, there is an effect that the molten lead poured from the base portion 21 side can easily flow toward the tab portion 30 side from the base portion 21 side, compared with the configuration in which the strap 20 does not have the inclined portion 35. As a result, the strap 20 can be molded with a shorter time required, whereby productivity of the lead-acid battery 100 can be improved.

When at least a part of the tab portion 30 is positioned on the third direction D3 side with respect to the base portion 21 as in the strap 20 according to the present embodiment, there is a problem in that release failure occurs due to the tab portion 30 being difficult to release at the time of releasing, compared with a strap with a shape in which the tab portion is provided in the upper portion of the base portion. Specifically, when the strap of a shape in which the tab portion is provided in the upper portion of the base portion is released, a portion near the gravity center of the strap can be pressed, by pressing the base portion from the lower side of the mold. Thus, not only the base portion but also the tab portion can be easily released. On the other hand, the strap 20 according to the present embodiment has the tab portion 30 positioned on the third direction D3 side. Thus, the gravity center of the strap 20 is offset toward the tab portion 30 side compared with the shape described above. With such a configuration, the tab portion 30 is difficult to release when the base portion 21 is pressed from the lower side of the mold.

The strap 20 according to the present embodiment includes the shoulder portion 38 that is provided between the first inclined surface 36 and the second inclined surface 37 of the inclined portion 35 and the inter cell connection portion 40, and is more gently inclined than the first inclined surface 36 and the second inclined surface 37. With the strap 20 thus including the shoulder portion 38, the strap 20 can be easily released by pressing the shoulder portion 38 from the lower side of the mold using a pin, at the time of releasing of the strap 20 after the molding. Thus, the release failure of the strap 20 can be prevented, whereby the productivity of the lead-acid battery 100 can be improved.

In the strap 20, the inclined portion 35 of the tab portion 30 includes a plurality of inclined surfaces (the first inclined surface 36 and the second inclined surface 37). With the strap 20 thus including a plurality of inclined surfaces, the second cross-sectional area, which is the minimum cross-sectional area of the tab portion 30, can be easily made large. With the inclined portion 35 including a plurality of inclined surfaces, a flow toward the tab portion 30 is even more facilitated at the time of molding of the strap 20, whereby moldability of the strap 20 can be improved.

### [Modification example]

Hereinafter, modification examples of the present invention will be described with reference to the drawings. For the convenience of description, members having the same function as the members described in the embodiment will be denoted with the same reference numerals, and the description thereof is omitted.

### (First modification example)

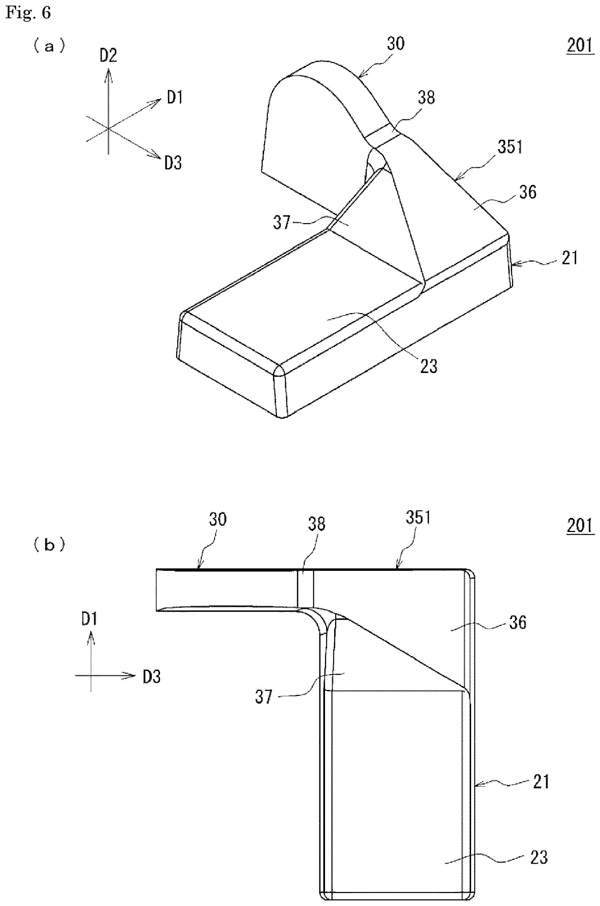

Fig. 6 is a diagram illustrating a strap 201 according to a first modification example. Fig. 6(a) is a perspective view, and Fig. 6(b) is a top view.

As illustrated in Fig. 6, the tab portion 30 of the strap 201 according to the first modification example includes an inclined portion 351 with a shape different from that of the inclined portion 35 according to the embodiment.

The inclined portion 351 of the strap 201 includes the first inclined surface 36 and the second inclined surface 37. The inclined portion 351 has a shape in which the width in the first direction D1 is the same as that in the inclined portion 35 according to the embodiment but the width in the third direction D3 is wider, in plan view (top view) from the upper side in the second direction D2. Specifically, the inclined portion 35 according to the embodiment is not formed over the entire width of the upper surface 23 of the base portion 21 in the third direction D3, whereas the inclined portion 351 according to the first modification example is formed over the entire width of the upper surface 23 of the base portion 21 in the third direction D3.

The strap 201 according to the first modification example with such a shape has a larger mass than the strap 20 according to the embodiment due to a larger amount of lead used, but provides the same effect as that provided by the strap 20 according to the embodiment.

### (Second modification example)

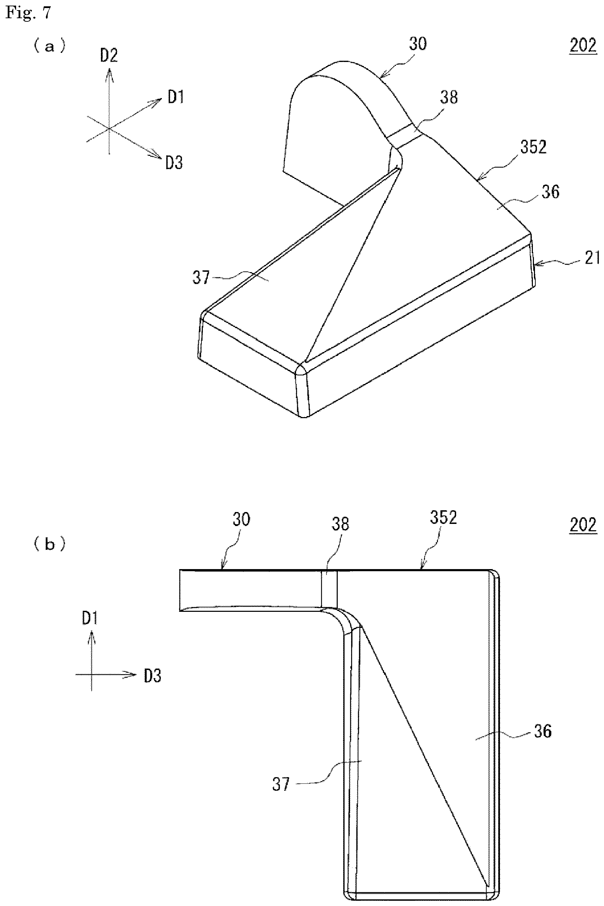

Fig. 7 is a diagram illustrating a strap 202 according to a second modification example. Fig. 7(a) is a perspective view, and Fig. 7(b) is a top view.

As illustrated in Fig. 7, the tab portion 30 of the strap 202 according to the second modification example includes an inclined portion 352 with a shape different from that of the inclined portion 35 according to the embodiment.

The inclined portion 352 of the strap 202 includes the first inclined surface 36 and the second inclined surface 37. The inclined portion 352 has a shape in which the width in the first direction D1 is wider and the width in the third direction D3 is wider than those in the inclined portion 35 according to the embodiment, in plan view (top view) from the upper side in the second direction D2. Thus, the inclined portion 352 according to the second modification example is formed substantially over the entirety of the upper surface 23 of the base portion 21.

The strap 202 according to the second modification example with such a shape has a larger mass than the strap 20 according to the embodiment due to a larger amount of lead used, but provides the same effect as that provided by the strap 20 according to the embodiment.

### (Other modification examples)

In the embodiment described above, an example is described in which the inclined portion 35 includes the first inclined surface 36 and the second inclined surface 37. Alternatively, the inclined portion 35 may include only one inclined surface or may include three or more inclined surface. Also in such a case, it is preferable for the inclined surface has the first width W1 larger than the second width W2.

In the embodiment described above, an example is described in which the first inclined surface 36 is a flat surface parallel to the first direction D1, and the second inclined surface 37 is a flat surface parallel to the third direction. However, the present invention is not limited to this. Specifically, the first inclined surface 36 and the second inclined surface 37 may be provided to intersect with any of the first direction D1 and the third direction D3. For example, the end portion of the first inclined surface 36 on the base portion 21 side may be provided to intersect with both of the first direction D1 and the third direction D3. The first inclined surface 36 and the second inclined surface 37 are not limited to flat surfaces, and may be curved surfaces. The present invention even encompasses such a configuration, as long as the first width W1 is wider than the second width W2.

The present invention is not limited to the embodiments described above, and can be changed in various ways with a scope of claims. The technical scope of the present invention includes embodiments obtained by appropriately combining technical means disclosed in different embodiments.

### [Summary]

(1) A lead-acid battery 100 according to one aspect of the present invention includes: elements 11 each having positive electrode plates 3 and negative electrode plates 2 alternately layered with a separator 4 provided in between and including a lug portion (positive electrode lug portion 3a, negative electrode lug portion 2a); straps 20, 201, 202 connected to the lug portions (positive electrode lug portion 3a, negative electrode lug portion 2a) of the elements 11; and a plurality of cell chambers 14 accommodating the respective elements 11 and the respective straps 20, 201, 202, wherein a direction in which the positive electrode plates 3 and the negative electrode plates 2 are layered is defined as a first direction D1, a direction in which the elements 11 and the lug portions (positive electrode lug portion 3a, negative electrode lug portion 2a) are connected to each other is defined as a second direction D2, and a direction orthogonal to the first direction D1 and the second direction D2 is defined as a third direction D3, the straps 20, 201, 202 each include: a base portion 21 including a connection region 22a connected with the lug portion (positive electrode lug portion 3a, negative electrode lug portion 2a); a tab portion 30 having at least a part positioned on side of the third direction D3 with respect to the base portion 21; and an inter cell connection portion 40 protruding in the first direction D1 from the tab portion 30 and electrically connecting the elements 11 accommodated in adjacent ones of the cell chambers 14, and a second cross-sectional area is larger than a first cross-sectional area, where the first cross-sectional area is a minimum cross-sectional area of the inter cell connection portion 40 in a plane orthogonal to the first direction D1, and the second cross sectional area is a minimum cross-sectional area of the strap 20, 201, 202 in a plane P dividing the strap 20, 201, 202 into one side corresponding to the connection region 22a and another side corresponding to the inter cell connection portion 40.

With the configuration described above, melting of the tab portion 30 before the melting of the inter cell connection portion 40 can be suppressed when a large current overwhelming the expected level flows in the lead-acid battery 100. As a result, even if the strap 20, 201, 202 melts due to the large current, a short circuit due to the molten lead dripping onto the element 11 from the straps 20, 201, 202 is less likely to occur. Therefore, the lead-acid battery 100 according to this embodiment is unlikely to become unusable even when a large current overwhelming the expected level flows therein.

The configuration described above can be rephrased as follows. A lead-acid battery 100 according to one aspect of the present invention includes: elements 11 each having positive electrode plates 3 and negative electrode plates 2 alternately layered with a separator 4 provided in between and including a lug portion (positive electrode lug portion 3a, negative electrode lug portion 2a); straps 20, 201, 202 connected to the lug portions (positive electrode lug portion 3a, negative electrode lug portion 2a) of the elements 11; and a plurality of cell chambers 14 accommodating the respective elements 11 and the respective straps 20, 201, 202, wherein a direction in which the positive electrode plates 3 and the negative electrode plates 2 are layered is defined as a first direction D1, a direction in which the elements 11 and the lug portions (positive electrode lug portion 3a, negative electrode lug portion 2a) are connected to each other is defined as a second direction D2, and a direction orthogonal to the first direction D1 and the second direction D2 is defined as a third direction D3, the straps 20, 201, 202 each include: a base portion 21 including a connection region 22a connected with the lug portion (positive electrode lug portion 3a, negative electrode lug portion 2a); a tab portion 30 having at least a part positioned on side of the third direction D3 with respect to the base portion 21; and an inter cell connection portion 40 protruding in the first direction D1 from the tab portion 30 and electrically connecting the elements 11 accommodated in adjacent ones of the cell chambers 14, and a second cross-sectional area is larger than a first cross-sectional area, where the first cross-sectional area is a minimum cross-sectional area of the inter cell connection portion 40 in a plane orthogonal to the first direction D1, and the second cross sectional area is a minimum cross-sectional area of the strap 20, 201, 202 in a plane P dividing the strap 20, 201, 202 into a first portion including the connection region 22a and a second portion including the inter cell connection portion 40.

(2) In the lead-acid battery 100 according to one aspect of the present invention, the tab portion 30 may include: an inclined surface (first inclined surface 36, second inclined surface 37) intersecting with the second direction D2 and connected with the base portion 21; and a shoulder portion 38 provided more on side of the inter cell connection portion 40 than the inclined surface (first inclined surface 36, second inclined surface 37) and having an inclination that is gentler than the inclined surface (first inclined surface 36, second inclined surface 37).

According to the above configuration, with the strap 20, 201, 202 including the shoulder portion 38, the strap 20, 201, 202 can be easily released by pressing the shoulder portion 38 from the lower side of the mold using a pin, at the time of releasing of the strap 20 after the molding. Thus, the release failure of the strap 20, 201, 202 can be prevented, whereby the productivity of the lead-acid battery 100 can be improved.

(3) In the lead-acid battery 100 according to one aspect of the present invention, the tab portion 30 may include an inclined surface (first inclined surface 36, second inclined surface 37), and the inclined surface (first inclined surface 36, second inclined surface 37) may intersect with the second direction D2, be connected with the base portion 21, and may have a first width W1 larger than a second width W2, the first width W1 being a width on side of the base portion 21, the second width W2 being a width on side opposite to the side of the base portion 21.

With the configuration described above, when the strap 20, 201, 202 is molded, the molten lead can easily flow from the base portion 21 side toward the tab portion 30, compared with a configuration where the strap 20, 201, 202 does not include the inclined portion 35. As a result, the flow to the tab portion 30 is facilitated, whereby molding failure of the strap 20, 201, 202 can be suppressed.

(4) In the lead-acid battery 100 according to one aspect of the present invention, the tab portion 30 may include an inclined surface (first inclined surface 36, second inclined surface 37), the inclined surface (first inclined surface 36, second inclined surface 37) may intersect with the second direction D2, and be connected with the base portion 21, and the tab portion 30 may include a plurality of the inclined surfaces (first inclined surface 36, second inclined surface 37).

According to the above configuration, with the strap 20, 201, 202 including a plurality of inclined surfaces, the second cross-sectional area, which is the minimum cross-sectional area of the tab portion 30 can be easily made large. With the inclined portion 35 including a plurality of inclined surfaces, a flow toward the tab portion 30 is even more facilitated at the time of molding of the strap 20, 201, 202, whereby moldability of the strap 20, 201, 202 can be improved.

### DESCRIPTION OF REFERENCE SIGNS

2: negative electrode plate
2a: negative electrode lug portion (lug portion)
3: positive electrode plate
3a: positive electrode lug portion (lug portion)
4: separator
11: element
14: cell chamber
20, 201, 202: strap
22a: connection region
30: tab portion
36: first inclined surface (inclined surface)
37: second inclined surface (inclined surface)
38: shoulder portion
40: inter cell connection portion
100: lead-acid battery
D1: first direction
D2: second direction
D3: third direction
P: plane
W1: first width
W2: second width

## Claims

1. A lead-acid battery comprising:
elements each having positive electrode plates and negative electrode plates alternately layered with a separator provided in between and comprising a lug portion;
straps connected to the lug portions of the elements; and
a plurality of cell chambers accommodating the respective elements and the respective straps separately, wherein
a direction in which the positive electrode plates and the negative electrode plates are layered is defined as a first direction, a direction in which the lug portions and the straps are connected to each other is defined as a second direction, and a direction orthogonal to the first direction and the second direction is defined as a third direction,
the straps each include:
a base portion including a connection region connected with the lug portion;
a tab portion having at least a part positioned in the third direction with respect to the base portion; and
an inter cell connection portion protruding in the first direction from the tab portion and electrically connecting the elements accommodated in adjacent ones of the cell chambers, and
a second cross-sectional area is larger than a first cross-sectional area, where
the first cross-sectional area is a minimum cross-sectional area of the inter cell connection portion in a plane orthogonal to the first direction, and
the second cross sectional area is a minimum cross-sectional area of the strap in a plane dividing the strap into one side corresponding to the connection region and another side corresponding to the inter cell connection portion.

2. The lead-acid battery according to claim 1, wherein
the tab portion includes:
an inclined surface intersecting with the second direction and connected with the base portion; and
a shoulder portion provided closer to the inter cell connection portion than the inclined surface and having an inclination that is gentler than the inclined surface.

3. The lead-acid battery according to claim 1 or 2, wherein
the tab portion includes an inclined surface, and
the inclined surface intersects with the second direction, is connected with the base portion, and has a first width larger than a second width, the first width being a width on side of the base portion, the second width being a width on side opposite to the side of the base portion.

4. The lead-acid battery according to any one of claims 1 to 3, wherein
the tab portion includes an inclined surface,
the inclined surface intersects with the second direction, and is connected with the base portion, and
the tab portion includes a plurality of the inclined surfaces.

## Patentansprüche

1. Blei-Säure-Batterie, umfassend:
Elemente, die jeweils positive Elektrodenplatten und negative Elektrodenplatten aufweisen, die mit einem Separator dazwischen abwechselnd vorgesehen sind, und
einen Fahnenabschnitt umfassen;
Bänder, die mit den Fahnenabschnitten der Elemente verbunden sind; und
mehrere Zellkammern, welche die jeweiligen Elemente und die jeweiligen Bänder separat aufnehmen, wobei eine Richtung, in der die positiven Elektrodenplatten und die negativen Elektrodenplatten geschichtet sind, als eine erste Richtung definiert ist, eine Richtung, in der die Fahnenabschnitte und die Bänder miteinander verbunden sind, als eine zweite Richtung definiert ist und eine Richtung orthogonal zu der ersten Richtung und der zweiten Richtung als eine dritte Richtung definiert ist, die Bänder jeweils aufweisen:
einen Basisabschnitt, der einen Verbindungsbereich aufweist, der mit dem Fahnenabschnitt verbunden ist;
einen Laschenabschnitt, der mindestens einen Teil aufweist, der in der dritten Richtung in Bezug auf den Basisabschnitt positioniert ist; und
einen Zwischenzellverbindungsabschnitt, der in der ersten Richtung von dem Laschenabschnitt vorsteht und die Elemente, die in benachbarten der Zellkammern aufgenommen sind, elektrisch verbindet, und
ein zweiter Querschnittsbereich größer ist als ein erster Querschnittsbereich, wobei
der erste Querschnittsbereich ein Mindestquerschnittsbereich des Zwischenzellverbindungsabschnitts in einer Ebene orthogonal zu der ersten Richtung ist und
der zweite Querschnittsbereich ein Mindestquerschnittsbereich des Bandes in einer Ebene ist, die das Band in eine Seite, die dem Verbindungsbereich entspricht, und eine andere Seite, die dem Zwischenzellverbindungsabschnitt entspricht, teilt.

2. Blei-Säure-Batterie nach Anspruch 1, wobei der Laschenabschnitt aufweist:
eine geneigte Fläche, welche die zweite Richtung schneidet und mit dem Basisabschnitt verbunden ist; und
einen Schulterabschnitt, der näher zu dem Zwischenzellverbindungsabschnitt als die geneigte Fläche vorgesehen ist und eine Neigung aufweist, die sanfter ist als die geneigte Fläche.

3. Blei-Säure-Batterie nach Anspruch 1 oder 2, wobei der Laschenabschnitt eine geneigte Fläche aufweist und die geneigte Fläche die zweite Richtung schneidet, mit dem Basisabschnitt verbunden ist und eine erste Breite aufweist, die größer ist als eine zweite Breite, wobei die erste Breite eine Breite auf einer Seite des Basisabschnitts ist, wobei die zweite Breite eine Breite auf einer Seite gegenüberliegend zu der Seite des Basisabschnitts ist.

4. Blei-Säure-Batterie nach einem der Ansprüche 1 bis 3, wobei
der Laschenabschnitt eine geneigte Fläche aufweist, die geneigte Fläche die zweite Richtung schneidet und mit dem Basisabschnitt verbunden ist und
der Laschenabschnitt mehrere der geneigten Flächen aufweist.

## Revendications

1. Batterie au plomb comprenant :
des éléments ayant chacun des plaques-électrodes positives et des plaques-électrodes négatives disposées en couches alternées avec un séparateur prévu entre elles et comprenant une portion d'ergot ;
des sangles connectées aux portions d'ergot des éléments ; et
une pluralité de chambres de cellule accueillant les éléments respectifs et les sangles respectives séparément, dans laquelle
une direction dans laquelle les plaques-électrodes positives et les plaques-électrodes négatives sont disposées en couche est définie en tant que première direction, une direction dans laquelle les portions d'ergot et les sangles sont connectées les unes aux autres est définie en tant que deuxième direction, et une direction orthogonale à la première direction et à la deuxième direction est définie en tant que troisième direction,
les sangles comportent chacune :
une portion de base comportant une région de connexion connectée à la portion d'ergot ;
une portion de languette ayant au moins une partie positionnée dans la troisième direction par rapport à la portion de base ; et
une portion de connexion entre cellules faisant saillie dans la première direction depuis la portion de languette et connectant électriquement les éléments accueillis dans des chambres adjacentes des chambres de cellule, et
une seconde aire en coupe est plus grande qu'une première aire en coupe, où
la première aire en coupe est une aire en coupe minimale de la portion de connexion entre cellules dans un plan orthogonal à la première direction, et
la seconde aire en coupe est une aire en coupe minimale de la sangle dans un plan divisant la sangle en un côté correspondant à la région de connexion et un autre côté correspondant à la portion de connexion entre cellules.

2. Batterie au plomb selon la revendication 1, dans laquelle la portion de languette comporte :
une surface inclinée coupant la deuxième direction et connectée à la portion de base ; et
une portion d'épaulement prévue plus près de la portion de connexion entre cellules que la surface inclinée et ayant une inclinaison qui est plus douce que la surface inclinée.

3. Batterie au plomb selon la revendication 1 ou 2, dans laquelle
la portion de languette comporte une surface inclinée, et la surface inclinée coupe la deuxième direction, est connectée à la portion de base, et a une première largeur plus grande qu'une seconde largeur, la première largeur étant une largeur sur un côté de la portion de base, la seconde largeur étant une largeur sur un côté opposé au côté de la portion de base.

4. Batterie au plomb selon l'une quelconque des revendications 1 à 3, dans laquelle
la portion de languette comporte une surface inclinée,
la surface inclinée coupe la deuxième direction, et est connectée à la portion de base, et
la portion de languette comporte une pluralité des surfaces inclinées.
